# EUROPEAN PATENT SPECIFICATION

(11) **EP 4 716 723 B1**
(45) Date of publication and mention of the grant of the patent: **22.07.2026**
(21) Application number: 24812200.4
(22) Date of filing: 13.11.2024
(51) Int. Cl.: C09D 11/102, C09D 11/106, C09D 11/322, C09D 11/326

(54) **AQUEOUS INKJET COMPOSITIONS**
WÄSSRIGE TINTENSTRAHLZUSAMMENSETZUNGEN
COMPOSITIONS AQUEUSES POUR JET D'ENCRE

(30) Priority: 17.11.2023 GB 202317656
(43) Date of publication of application: 01.04.2026
(73) Proprietor: Sun Chemical B.V., 1382 LV Weesp (NL)
(72) Inventor: ILLSLEY, Derek, Bath, BA3 4RT (GB)
(74) Representative: Carpmaels & Ransford LLP
(86) International application number: PCT/GB2024/052876
(87) International publication number: WO 2025/104425

(56) References cited:
- US-A1- 2023 242 782
- US-A1- 2023 348 746

## Description

The present invention relates to aqueous inkjet compositions comprising hydroxy-functional polyurethane dispersions (OH-PUDs).

An issue with conventional polyurethane dispersions ('PUDs'), when used in aqueous inks for inkjet printing, is that although they can confer useful print properties such as wet rub resistance, they typically do not have good resolubility. Resolubility of an ink is its ability to redissolve into itself or a suitable flushing solution when it is partially or fully dried. Resolubility is a useful attribute for inkjet printing as it reduces the risk of the nozzles of a printhead becoming blocked and causing printing defects, or in the worst case the possible catastrophic loss of the printhead itself.

Aqueous inkjet compositions comprising low molecular weight (typically less than 10,000 Dalton) self-crosslinking PUDs and resoluble aqueous inkjet compositions comprising hydroxyl-functional PUDs (OH-PUDs) of low molecular weight have been described previously. The present inventor has found that a further feature of OH-PUDs enabling ink resolubility, and one that has not been anticipated, is that they should have low average particle size. Indeed, the inventor has found that an OH-PUD with a molecular weight (Mw) of ≥ 10,000 Dalton, preferably ≥ 12,000 Dalton (and even up to greater than 50,000 Dalton in some cases) but with an average particle size of ≤ 60nm, for example, around 20-60nm, produced an ink with good resolubility. This is counter to the state of the art, which indicates that PUDs should be of low molecular weight, and/or hydroxyl-functional, to achieve ink resolubility.

Preferably, the average particle size of the PUD is less than 50nm, and the hydroxyl value (on dry PUD solid content) is in the range of 15 to 50 mgKOH/g to ensure the best possible ink resolubility, while enabling dried prints of the ink to achieve good water resistance. This finding has been observed to be particularly important for PUDs produced using polycarbonate diol prepolymers in their synthesis. Thus, it is advantageous that the particle size (and hydroxyl value) should be controlled within set limits to achieve the best balance of properties, i.e., both the ink resolubility and the capacity for the inks to deliver dried prints having good water resistance.

It is important to note that inks comprising the PUDs of the invention are resoluble in the wet ink itself or an aqueous solution comprising a base, such as an amine. This means that even if the ink dries in the printhead it is able to redissolve so that it does not then block the printhead. However, the inks comprising the PUDs of the invention when printed onto a substrate and then dried do not redissolve into water, thus providing the required water resistance. It is this understanding of the impact of both particle size and hydroxyl content of the PUD on an inks' properties that is key to the invention and has not previously been described. The present inventor has found that it is possible to produce a resoluble ink with a PUD of relatively high molecular weight (in some cases even greater than 50,000), which the current state of the art teaches away from.

US11242465 (Sensient Imaging Technologies) relates to the use of hydroxyl-functional polyurethane dispersions ('OH-PUDs') in producing aqueous inkjet compositions having good resolubility. The ink examples only used a hydroxy-functional polyurethane dispersion (OH-PUD) having a hydroxyl value, based on the dry polymer weight, of 95 mgKOH/g. To overcome the innate poor water resistance of the inks, all the examples comprised the polycarbodiimide crosslinker Carbodilite SV-02. US11242465 claims that the PUD has a hydroxyl value in the range 80-200 mgKOH/g. The present inventor has found that when such high hydroxyl value PUDs are used in inks, they produce prints with poor water resistance. Also, the inventor has found that when an OH-PUD with a hydroxyl value in excess of 100 mgKOH/g and also with a particle size in excess of 50nm is used, the consequent ink resolubility is poor. Thus, in the present invention the hydroxyl value (i.e., hydroxyl content) is preferably 10-60 mgKOH/g, more preferably 10-50 mgKOH/g, more preferably 20-50 mgKOH/g, and most preferably 20-40 mgKOH/g based on the dry PUD weight. A degree of OH-functionality aids resolubility, so it is preferred that the hydroxyl value of the PUD should be at least 10, and more preferably at least 20 mgKOH/g, based on the dry polymer weight.

In the present invention, the average particle size is preferably less than 60nm, more preferably less than 50nm and most preferably less than 40nm. Preferably, the average particle size is 10-60nm; 10-50nm; or 10-40nm; or 15-60nm; or 15-50nm; or 15-40nm.

Inks comprising the PUDs within the limits of the present invention can deliver prints with excellent water resistance, and also superior to that of inks comprising OH-PUDs and polycarbodiimide crosslinkers, according to US11242465. The inventor has found that the use of a polycarbodiimide crosslinker can have a negative impact on the ink resolubility of compositions comprising OH-PUDs. Thus, the ink composition of the present invention may preferably be free of a polycarbodiimide crosslinker.

A further aspect of the invention is that the PUDs are preferentially prepared using polycarbonate diols. Advantageously, this enables prints with improved scratch and block resistance.

Yet a further aspect of the invention is that the PUDs, as described herein, are used in aqueous inkjet compositions which further comprise aqueous pigment dispersions prepared using anionic dispersants. Particularly preferred dispersants are those based on aqueous solutions of anionic polymeric or resin dispersants, including rosin ester derivatives and styrene-maleic anhydride copolymers. The nature of suitable dispersants is described more fully below. Especially preferred pigment dispersants encompassed by the invention are copolymers of styrene and maleic anhydride (or maleic acid or fumaric acid) where the ratio of styrene to maleic anhydride is 2:1 or greater and where the weight average molecular weight of the copolymer is 5000 or greater. It is further preferred that the styrene-maleic anhydride dispersant be partially or fully neutralized with ammonia or an organic base to enable the preparation of the aqueous solution. Where an organic base is used, any may be used, but those having a pKb of greater than 4.1 are preferred such as ethanolamine (pKb of about 4.6) and aminomethyl propanol (pKb of about 4.3). The styrene/maleic anhydride copolymer may also be neutralized with ammonia (pKb = 4.75).

The PUDs of the invention allow resoluble inks to be prepared with co-solvent concentrations of 25% or less, and even as low as 5%. Typical cosolvents used include those with boiling points of less than 200°C, such as propylene glycol (PG) and 3-methoxy-3-methyl-1-butanol.

As mentioned above, US11242465 describes resoluble inks comprising OH-PUDs. The need for the use of a crosslinker to enhance the print performance of inks and coatings containing the OH-PUD used in that case is further supported by US11059992 (Sun Chemical) which describes a composition comprising the same PUD (with a hydroxyl value of 95 mgKOH/g) along with a crosslinker. Neither of these cases anticipate that by controlling a PUD's hydroxyl value and importantly, the particle size, within the ranges described for the present invention, enables them to be used in aqueous inkjet (and flexo and gravure) compositions to provide inks having a highly desirable, and previously unobtainable, balance of ink resolubility and ability to produce prints with excellent water resistance. Indeed, it has been considered by those skilled in the art that this balance of properties would be unachievable without recourse to the use of a crosslinking chemistry operatable after printing.

Recently, WO2023/007143 mentioned the use of self-crosslinking low molecular weight (MW) PUDs in the preparation of resoluble aqueous inkjet compositions. These PUDs were chain terminated with ketone groups that could undergo crosslinking with reagents such as adipic dihydrazide. They could further comprise hydroxyl groups as part of their structure. The current invention is directed most favorably towards PUDs prepared using a polycarbonate diol as part of its polyurethane structure. Using polycarbonate diols in the preparation of PUDs, rather than polyether diols, polyester diols or polyacrylic diols, confers useful properties on an ink, especially relating to the resistance properties including water resistance, abrasion resistance and hardness. The enhanced hardness conferred through the use of polycarbonate diols is useful for the preparation of aqueous inkjet compositions as it enhances what is commonly referred to as block resistance. Blocking of an ink refers to a print that when stacked or reeled, tend to stick to the contacting reverse-side of the overlaying printed matter. In the worst case this can lead to ink being transferred to the reverse side of the printed matter and also causing the stacked or reeled printed matter to become an inseparable mass. The inventor has found that inks prepared using PUDs comprising a polyester diol have a tendency to block, whereas PUDs based on polycarbonate diols have much improved block resistance.

Preferably, the PUDs used in the present invention do not have a ketone or aldehyde group (or groups) at one or more polymer chain ends. Preferably, the PUDs used in the present invention do not have a ketone or aldehyde groups at the polymer chain ends.

Another approach taken to enhancing the print properties of aqueous compositions comprising OH-PUDs, is to blend them with styrene-acrylic dispersions, particularly self-crosslinking styrene-acrylic dispersions, as laid out in WO2022/079414 (Sun Chemical). In this instance, compositions comprising OH-PUDs having hydroxyl values greater than 50 mgKOH/g were blended with the aforementioned styrene-acrylic dispersions to achieve inks having a degree of resolubility but able to produce prints having a degree of water resistance.

In a similar vein, OH-PUDs can be blended with conventional PUDs, i.e., those having little (i.e., <10 mgKOH/g) or no hydroxyl content and having molecular weights typically greater than 25000. This approach was mentioned in WO2022/208096, but again the capacity of PUDs according to the present invention to deliver resoluble inks which can also produce dried prints of excellent water and block resistance was not mentioned.

Hewlett Packard have recently described a low molecular weight PUD comprising sulfonate groups rather than carboxylic acids (US20220403188). It should be noted that the PUDs of the present invention comprise carboxylic acid groups rather than sulfonate groups and that the PUDs of US20220403188 do not comprise hydroxyl groups. US20220403188, like other references, mention PUDs having a broad particle size range which in the case of US20220403188, may be in the range 10 to 100nm. Similarly, JP2022146167 (Sanyo), mentions a particle size range of 10 to 120nm for a polyurethane dispersion used in aqueous inkjet compositions. However, the inventor has been unable to identify any references that mention the importance of particle size for good ink resolubility, and more so for OH-PUDs, and especially those prepared using polycarbonate diols.

WO2022/003336 (Sun Chemical) describes how aqueous inkjet compositions comprising OH-PUDs can be printed over specific primer coatings to control the print quality and to enable subsequent adhesive lamination, particularly of flexible plastic laminates used in food packaging. Yet again, the key aspects of the current invention relating to the particle size, control of hydroxyl vale and the preferential use of a polycarbonate diol in the PUD synthesis were not revealed. The ability of the current invention to produce prints having excellent water resistance is very advantageous for surface print applications, including graphics printing, surface print flexible packaging, cartonboard packaging printing, corrugated printing, the printing of textiles, décor printing (paper and vinyl laminates), etc. WO2022/003336 describes prints which were subsequently laminated and as such did not require good water resistance.

To enhance print robustness, especially to reduce the tackiness of any print and thereby improve the block and rubfastness, it is preferred that a polycarbonate diol prepolymer be used in the preparation of the PUDs of the invention. As will be understood by the person skilled in the art, controlling particle size to the desired sub 60nm range can be typically achieved by control of the manufacturing process (temperature and shear for example) and using an appropriate acid value of the PUD. It should be understood that the process used to deliver PUDs of the invention's required particle size is not part of the invention, merely that PUDs with the requirements of hydroxyl value, and most preferably sub 60nm particle size be used.

It is possible to produce OH-PUDs by a number of methods. US7875355 (Sherwin Williams) describes the preparation of OH-PUDs having non-terminal hydroxyl groups by using difunctional amines such as 1,3-Diamino-2-propanol and aminoethylethanolamine. These reagents react to form urea links with isocyanate-functional prepolymers to form the OH-PUD.

A common way to produce OH-PUDs is to use a stoichiometric excess, based on the concentration of hydroxyl to isocyanate, of a prepolymer polyol, typically a diol, in the reaction with the diisocyanate or polyisocyanate monomer. Thus, US8931889 (DuPont) and US7902302 (Bayer) mention the preparation of OH-PUDs by using an excess of polyether and polyester diols.

Hewlett Packard documents mention PUDs within various molecular weight limits for the use in aqueous inkjet compositions. US7872060 (Hewlett Packard) mentions compositions comprising PUDs with weight average molecular weights between 50000 and 500000; US8563634 (Hewlett Packard) mentions aqueous inkjet compositions which can comprise PUDs with weight average molecular weights in the range 32000 to 50000; and US8573762 (Hewlett Packard) mentions aqueous inkjet compositions which may comprise PUDs with weight average molecular weights in the range of 20000 to 50000. US8573762 mentions that these PUDs with relatively low molecular weight help with what is termed 'sustained decap', which is probably related to the ink resolubility.

The present inventor has found that a OH-PUD with a weight average molecular weight greater than 50,000 but meeting the conditions of the invention is able to produce inks with a degree of resolubility. Furthermore, the compositions used in the aforementioned reference for this extended (i.e., sustained) decap used water-soluble organic solvents with very high boiling points, for instance di-(2-Hydroxyethyl)-5,5-dimethylhydantoin, with a boiling point in excess of 350°C. The present invention achieves aqueous ink compositions using PUDs according to the property ranges previously described, without recourse to such high boiling point co-solvents. Indeed, the current invention achieves highly resoluble inks when solvents having boiling points less than 200°C are used. Another aspect of the invention is that resoluble inks are achieved with compositions comprising organic co-solvents having boiling points of less than 200°C and heats of vaporization of less than 500 J/g. Indeed, the inventor has found that it is possible to prepare resoluble inks with concentrations of propylene glycol, or other glycol type water-soluble solvent, of 15% or less of the total ink composition.

The OH-PUDs of the current invention may be prepared by any method, so long as the final product meets the particle size and hydroxyl value requirements.

The key finding of the present invention, which has been found to contribute significantly to the resolubility of PUDs when used in the preparation of aqueous inkjet compositions, is that the average particle size of the PUD should be less than 60nm. It has been found that when the particle size reaches even 65 to 75nm that the ink resolubility is significantly worse than for an ink comprising a PUD with an average particle size less than 50nm.

JP7286891B1 mentions aqueous inkjet compositions comprising a urea-containing PUD (A) and a second, low molecular weight PUD (B) where the weight average molecular weight was claimed at less than 6000. On examining the preparation of the PUD (B) variants of '891 a number of things are apparent. Firstly, polyester diols are used in the preparation, there is no incorporation of an acid containing monomer such as dimethylol propionic acid to confer the anionic nature of the preferred PUDs of the current invention. Furthermore, no mention of the beneficial effect of the low particle size of the current invention is made.

WO2023/031029 mentions the preparation of PUDs that may be suitable for use in aqueous inkjet compositions. These PUDs are prepared using a blend of polycarbonate and polyester diols. Although claiming particle sizes in the range 30 to 70nm, all the examples had particle sizes in excess of 50nm. Furthermore, these PUDs do not meet the hydroxyl value requirement of the current invention.

US20220403188 describes PUDs comprising (sodio) sulfonate groups as part of their chemical structure. The PUDs of the current invention are free of both sulfonate groups and do not comprise any sodium in their structure. US20220403188 mentions PUDs with particle sizes in the range of 10 to 100nm and weight average molecular weights in the range 5000 to 50000. The present invention requires that the average particle size should be less than 60nm. The present invention shows that good resolubility can even be achieved using a OH-PUD with a molecular weight greater than 50000, where the particle size is less than 60nm.

Polyurethane dispersions (PUDs) are seemingly the predominant resin chemistry used in the preparation of pigmented aqueous inkjet printing inks. There are several instances in the prior art of the use of amino resins, such as melamine-formaldehydes, to crosslink aqueous inkjet printing inks containing PUDs, especially in the printing of textiles. WO2009/137753 (DuPont) mentions how PUDs can be crosslinked with Cymel 303, a melamine-formaldehyde crosslinker, at a temperature of 160°C. A number of other patents and patent applications mention the use of optional crosslinkers in combination with PUDs to enable improved resistance properties, including WO2019/074683 (Eastman Kodak), US20190106587 (Eastman Kodak), US10513622 (Eastman Kodak), JP2002294112 (DIC). US9249324 (DuPont), which mentions polyurethane pigment dispersants, usefully lays out the crosslinking possibilities for polyurethanes having any of carboxylic acid, hydroxyl or amine pendant functional groups. Crosslinkers include carbodiimides, epoxies, isocyanates, amino resins (e.g. melamine-formaldehyde), aziridines.

Another approach to achieving aqueous inkjet compositions having both good resolubility and the capacity to produce prints having excellent water resistance is by using acrylated polyurethane dispersions ('Ac-PUDs') in the preparation of UV-, and EB-curable aqueous inkjet printing compositions. This has been mentioned quite widely, for example in US10076909 (Fujifilm), EP3390545 (Fujifilm), and WO2018/138525 (Fujifilm). The crosslinking of these Ac-PUDs is induced using a suitable photoinitiator in the case of UV-curing. In principle, such compositions will have excellent stability since crosslinking can only be induced in the presence of intense UV light or EB radiation once the ink composition has been partially or fully dried after printing. However, the use of photoinitiators can pose a risk of unwanted migration of low molecular weight compounds from a cured ink, which would be undesirable in many applications, especially the printing of food packaging. Furthermore, Ac-PUDs can be prone to hydrolysis of the acrylate groups, resulting in the liberation of acrylic acid causing potential pH instability issues, again undesirable for inkjet printing.

Citation or identification of any document in this application is not an admission that such represents prior art to the present invention.

### SUMMARY OF INVENTION

In a first aspect, the present invention provides an aqueous inkjet composition comprising a hydroxy-functional PUD, wherein the PUD has an average particle size of ≤ 60nm and a hydroxyl content, based on the dry polymer weight, of ≤60 mgKOH/g, wherein the composition further comprises an aqueous pigment dispersion prepared using an anionic dispersant, wherein the anionic dispersant is:
(i) a copolymer of styrene and maleic anhydride neutralized with a material selected from the group consisting of ammonia, aminomethyl propanol, ethanolamine or blends thereof; and/or
(ii) a rosin resin neutralized with ammonia.

In a preferred aspect, the present invention provides an aqueous inkjet composition comprising a hydroxy-functional PUD, wherein the PUD has an average particle size of ≤ 60nm and a hydroxyl content, based on the dry polymer weight, of ≤60 mgKOH/g, wherein the composition further comprises an aqueous pigment dispersion prepared using an anionic dispersant, wherein the anionic dispersant is:
(i) a copolymer of styrene and maleic anhydride neutralized with a material selected from the group consisting of ammonia, aminomethyl propanol, ethanolamine or blends thereof; or
(ii) a rosin resin neutralized with ammonia.

In a further preferred aspect, the present invention provides an aqueous inkjet composition comprising a hydroxy-functional PUD, wherein the PUD has an average particle size of ≤ 60nm and a hydroxyl content, based on the dry polymer weight, of ≤60 mgKOH/g, wherein the composition further comprises an aqueous pigment dispersion prepared using an anionic dispersant, wherein the anionic dispersant is a copolymer of styrene and maleic anhydride neutralized with a material selected from the group consisting of ammonia, aminomethyl propanol, ethanolamine or blends thereof.

In a preferred aspect, the hydroxy-functional PUD has an average particle size of ≤ 60nm, a hydroxyl content, based on the dry polymer weight, of ≤60 mgKOH/g and an average molecular weight of ≥ 10,000 Dalton. In a more preferred aspect, the hydroxy-functional PUD has an average particle size of ≤ 60nm, a hydroxyl content, based on the dry polymer weight, of ≤60 mgKOH/g and an average molecular weight of ≥ 12,000 Dalton.

### DETAILED DESCRIPTION

The present application discloses the finding that aqueous printing inks having excellent resolubility (also referred to in some instances as redispersibility) but with the capacity to produce water resistant prints can be prepared using polyurethane dispersions ('PUDs') with defined particle sizes and hydroxyl contents. Thus, the PUDs of the invention have average particle sizes of ≤ 60nm, preferably have average particle sizes of 60 nm or less, and more preferably 50nm, or less, and hydroxyl values, based on the dry polymer weight, of less than 60 mgKOH/g (but greater than 10 mgKOH/g). Although the PUDs of the invention may be prepared using any prepolymer diol selected from polyester diols, polyether diols, polyacrylic diols and polycarbonate diols, it is preferred that the PUDs of the invention are produced using polycarbonate diols (i.e., it is preferred that the PUDs of the invention are derived from polycarbonate diol prepolymers). The PUDs used in the inks of the invention are preferably anionic in nature, in that they comprise carboxylic acid groups as part of their backbone. This is typically achieved by using a diol bearing a carboxylic acid, such as dimethylol propionic acid (DMPA), in the manufacture of the PUD. To stabilize the polyurethane dispersion the carboxylic acid groups are neutralized with a base, such as N,N-dimethylethanolamine (DMEA), triethylamine, or an inorganic base, such as potassium hydroxide. It is preferred that the base used to neutralize the carboxylic acid groups of the PUD are tertiary amines having a boiling point of 200°C, or less, and more preferably 150°C, or less.

The PUDs of the invention have an average particle size of ≤ 60nm. Preferably, the PUDs of the invention have an average particle size of ≤ 50nm, more preferably < 50nm.

Preferably, the PUDs of the invention have a particle size of 10-60nm, more preferably 10-50nm, more preferably 10-40nm. In an alternative preferred aspect, the PUDs of the invention have a particle size of or 15-60nm, preferably 15-50nm, more preferably 15-40nm.

The PUDs of the invention have a hydroxyl content, based on the dry polymer weight, of ≤60 mgKOH/g. Preferably, the PUDs of the invention have a hydroxyl content, based on the dry polymer weight, of ≤50 mgKOH/g. Preferably, the PUDs of the invention have a hydroxyl content, based on the dry polymer weight, of ≥10 mgKOH/g, and more preferably ≥20 mgKOH/g.

Preferably, the PUDs of the invention have a hydroxyl value (i.e., hydroxyl content) of 10-60 mgKOH/g, more preferably 20-60 mg KOH/g based on the dry PUD weight. Preferably, the PUDs of the invention have a hydroxyl value (i.e., hydroxyl content) of 10-55 mgKOH/g, more preferably 20-55 mgKOH/g, based on the dry PUD weight. In an alternative preferred aspect, the PUDs of the invention have a hydroxyl value (i.e., hydroxyl content) of 10-50 mgKOH/g, more preferably 15-50 mgKOH/g, even more preferably 20-50 mgKOH/g, and most preferably 20-40 mgKOH/g based on the dry PUD weight.

Preferably, the PUDs of the invention have an average particle size of 10-40nm and a hydroxyl content of 20-60 mgKOH/g.

Preferably, the PUDs of the invention have an average particle size of ≤ 50nm and a hydroxyl content, based on the dry polymer weight, of ≤50 mgKOH/g. More preferably, the PUDs of the invention have an average particle size of ≤ 50nm and a hydroxyl content, based on the dry polymer weight, of 15 to 50 mgKOH/g.

Preferably, the PUDs of the invention have an average particle size of < 50nm and a hydroxyl content, based on the dry polymer weight, of ≤ 50 mgKOH/g. More preferably, the PUDs of the invention have an average particle size of < 50nm and a hydroxyl content, based on the dry polymer weight, of 15 to 50 mgKOH/g.

Preferably, the PUDs of the invention are derived from polycarbonate diol prepolymers. Preferably, the PUDs of the invention are derived from polycarbonate diol prepolymers and have an average particle size of ≤ 50nm and a hydroxyl content, based on the dry polymer weight, of 15 to 50 mgKOH/g. More preferably, the PUDs of the invention are derived from polycarbonate diol prepolymers and have an average particle size of < 50nm and a hydroxyl content, based on the dry polymer weight, of 15 to 50 mgKOH/g.

Preferably, the PUDs used in the present invention have an average molecular weight of ≥ 10,000 Dalton, more preferably ≥ 12,000 Dalton. In some cases, the PUDs used in the present invention have an average molecular weight of ≥ 50,000 Dalton.

Preferably, the PUDs used in the present invention have an average molecular weight of less than 150,000 Dalton, more preferably less than 100,000 Dalton. Preferably, the PUDs used in the present invention have an average molecular weight of 10,000-150,000 Dalton, preferably from 12,000-100,000 Dalton.

Preferably, the PUDs used in the present invention have an average particle size of ≤ 60nm, a hydroxyl content, based on the dry polymer weight, of ≤60 mgKOH/g and an average molecular weight of ≥ 10,000 Dalton. More preferably, the PUDs used in the present invention have an average particle size of ≤ 60nm, a hydroxyl content, based on the dry polymer weight, of ≤60 mgKOH/g and an average molecular weight of ≥ 12,000 Dalton. Even more preferably, the PUDs used in the present invention have an average particle size of ≤ 60nm, a hydroxyl content, based on the dry polymer weight, of ≤60 mgKOH/g and an average molecular weight of ≥ 50,000 Dalton.

Preferably, the PUDs used in the present invention have an average particle size of 20-60nm, a hydroxyl content of 20-60 mgKOH/g and a molecular weight of ≥ 10,000 Dalton. More preferably, the PUDs of the invention have an average particle size of 20-60nm, a hydroxyl content of 20-60 mgKOH/g and a molecular weight of ≥ 12,000 Dalton.

Preferably, the PUDs used in the present invention have an average particle size of 10-40nm, a hydroxyl content of 20-60 mgKOH/g and a molecular weight of ≥ 10,000 Dalton. More preferably, the PUDs of the invention have an average particle size of 10-40nm, a hydroxyl content of 20-60 mgKOH/g and a molecular weight of ≥ 12,000 Dalton.

Preferably, the PUDs used in the present invention have an average particle size of 20-60nm, a hydroxyl content of 20-60 mgKOH/g and a molecular weight of 10,000-150,000 Dalton. More preferably, the PUDs of the invention have an average particle size of 20-60nm, a hydroxyl content of 20-60 mgKOH/g and a molecular weight of 12,000-120,000 Dalton.

Preferably, the PUDs used in the present invention have an average particle size of 10-40nm, a hydroxyl content of 20-60 mgKOH/g and a molecular weight of 10,000-150,000 Dalton. More preferably, the PUDs of the invention have an average particle size of 10-40nm, a hydroxyl content of 20-60 mgKOH/g and a molecular weight of 12,000-120,000 Dalton.

Preferably, the inks of the present invention comprise from about 1 to about 30% PUD based on dry polymer weight. More preferably, the inks of the present invention comprise from about 4 to about 20% PUD based on dry polymer weight, even more preferably from about 4 to about 16%.

Preferably, the PUDs used in the present invention are not derived from polyether diol, polyester diol or polyacrylic diol prepolymers.

Preferably, the PUDs used in the present invention are free of sulfonate groups. Preferably, the PUDs used in the present invention do not comprise any sodium in their structure. Preferably, the PUDs used in the present invention are free of sulfonate groups and do not comprise any sodium in their structure.

Preferably, the compositions of the present invention further comprise an aqueous pigment dispersion.

Another feature of the invention is the nature of the pigment dispersion used in the preparation of the inks. For inks producing the best possible water resistance it is preferable that the pigment dispersion should comprise minimal (i.e., less than 5%, preferably less than 2%) or no non-ionic dispersants, or dispersants comprising poly(alkylene oxides), especially poly(ethylene glycol) as part of their chemical structure. Non-ionic dispersants include non-ionic surfactants such as ethoxylated alcohols and non-ionic PUDs. The inks of the invention are most preferably prepared with pigment dispersions prepared with anionic dispersants such as alkali-soluble styrene-maleic anhydride (acid) copolymers comprising carboxylic acid groups from the use of monomers including, but not limited to: maleic acid, maleic anhydride. Neutralizing the carboxylic acid groups of these anionic dispersants enables them to from aqueous solutions suited for dispersing a range of organic and inorganic pigments. Pigment dispersions prepared using aqueous solutions of copolymers of styrene and maleic anhydride have been found to produce inks in combination with the PUDs of the invention that not only have excellent resolubility but are also able to produce prints with good water resistance and a low degree of tackiness. Inks having low tack are able to alleviate issues with block resistance, which has been previously described.

Preferably, the compositions of the present invention further comprise an aqueous pigment dispersion, wherein the aqueous pigment dispersion comprises an anionic dispersant. Preferably, the compositions of the present invention further comprise an aqueous pigment dispersion, wherein the aqueous pigment dispersion comprises less than 5%, preferably less than 2%, of non-ionic dispersants and/or dispersants comprising poly(alkylene oxides).

More preferably, the compositions of the present invention further comprise an aqueous pigment dispersion, wherein the aqueous pigment dispersion comprises an anionic dispersant and less than 5%, preferably less than 2%, of non-ionic dispersants and/or dispersants comprising poly(alkylene oxides). More preferably, the compositions of the present invention further comprise an aqueous pigment dispersion, wherein the aqueous pigment dispersion comprises an anionic dispersant and no non-ionic dispersants and/or dispersants comprising poly(alkylene oxides).

Preferably, the aqueous inkjet compositions of the present invention comprise a hydroxy-functional PUD as defined herein, a pigment and an anionic dispersant, wherein the anionic dispersant is: (i) a copolymer of styrene and maleic anhydride neutralized with a material selected from the group consisting of ammonia, aminomethyl propanol, ethanolamine or blends thereof; and/or (ii) a rosin resin neutralized with ammonia. More preferably, the aqueous inkjet compositions of the present invention comprise a hydroxy-functional PUD as defined herein, a pigment and an anionic dispersant, wherein the anionic dispersant is: (i) a copolymer of styrene and maleic anhydride neutralized with a material selected from the group consisting of ammonia, aminomethyl propanol, ethanolamine or blends thereof; or (ii) a rosin resin neutralized with ammonia. Even more preferably, the aqueous inkjet compositions of the present invention comprise a hydroxy-functional PUD as defined herein, a pigment and an anionic dispersant, wherein the anionic dispersant is a copolymer of styrene and maleic anhydride neutralized with a material selected from the group consisting of ammonia, aminomethyl propanol, ethanolamine or blends thereof.

Preferably, the inks of the present invention comprise from about 1 to about 15% pigment based on the dry weight of the pigment, more preferably from about 2 to about 10%, even more preferably from about 2 to about 8%.

Preferably, the inks of the present invention comprise from about 4 to about 20% PUD based on dry polymer weight and from about 2 to about 10% pigment based on the dry weight of the pigment, more preferably from about 4 to about 16% PUD based on dry polymer weight and from about 2 to about 8% pigment based on the dry weight of the pigment.

The inks of the invention are especially suited to inkjet printing where the excellent resolubility conferred by the technology will help to reduce the risks associated with an ink becoming irreversibly dried into the nozzles of the printhead.

The use of the PUDs of the specified low particle size and hydroxyl content in aqueous ink compositions confers the resolubility/redispersibility of the inks, which is an especially useful feature for aqueous inkjet printing inks. Resolubility/redispersibility, in the context of this invention and inkjet more broadly, can be described as the ability of an ink drying at temperatures up to 40, and even 50°C, for periods up to one hour, to re-dissolve, or redisperse into itself or a suitable 'flushing' solution. Inks comprising conventional PUDs, conventional self-crosslinking PUDs and styrene-acrylics have poor resolubility. A further feature of the invention is the capacity of dried inks to redissolve or redisperse into an aqueous solution comprising an amine or inorganic base, yet not redissolve into water. Furthermore, the invention encompasses resolubility into aqueous solutions of such bases where the pH has been buffered to pH's of less than 9.0. This is an important feature for use in inkjet printheads where the non-wetting coatings of the faceplates are prepared using sol-gel chemistry processes. Such sol-gel coatings, derived from silanes, are prone to hydrolysis under highly alkaline or acidic compositions resulting in degradation of the faceplate coating and subsequent loss of the non-wetting function. This is something well understood by those skilled in the art.

References have described inks having resolubility using hydroxyl-functional PUDs ('OH-PUDs'), but these used OH-PUDs with hydroxyl values (OHV) of 55 mgKOH/g, or greater. However, to achieve satisfactory print resistance a crosslinker (such as a polycarbodiimide) was required. The present inventor has found that the use of such crosslinkers can have a significant negative impact on the ink resolubility. As such, the present invention provides a previously unachievable blend of ink resolubility and capacity to produce prints having excellent water resistance without using any additional crosslinker or a co-resin, such as a styrene-acrylic resin. It should be understood that the invention does not preclude the optional use of such crosslinkers and co-resins. However, it is preferred that additional crosslinkers and co-resins are not present in the composition of the invention.

For inkjet printing, the invention is exceptionally advantageous as the good resolubility will help to prevent the irreversible drying of inks in a printhead. If such irreversible drying of an ink in a printhead occurred it could lead to blocked nozzles and a consequent loss in print quality performance or, even worse, the loss of the printhead itself. So, it can be seen that an ideal solution for an inkjet printing ink would be one that has good resolubility (with advantages of open time) yet at the same time being able, after printing and drying, to produce water resistant prints. The invention achieves this without recourse to the use of excessive concentrations of high boiling point co-solvents such as glycerol and propylene glycol. Indeed, the inventive inks maintain good resolubility/redispersibility with propylene glycol concentrations as low as 7.5% of the ink composition. Thus, a further aspect of the invention is that the concentration of organic water-soluble co-solvents, and especially those having heats of vaporization of 500 J/g, or greater and boiling points greater than 150°C, should preferably be less than 30%, and more preferably 25% or less of the total ink composition. Where such co-solvents are used, then any combination of solvents having boiling points of greater than 200°C, should preferably be less than 10% of the ink composition.

The issue with using conventional PUDs (those of essentially zero hydroxyl content and weight average molecular weights of 50000 or greater) by themselves in the preparation of aqueous inkjet ink compositions is that when they are dried at temperatures up to 40°C, for between 15 and 60 minutes, they become largely insoluble in either the ink itself or a flushing solution. This issue is resolved by the current invention. Contrariwise, OH-PUDs, especially those having hydroxyl values of greater than 60 mgKOH/g, can produce inks having excellent resolubility/redispersibility, but which generally produce dried prints with poor water resistance. Again, this issue is resolved by the invention.

The inkjet printing inks of the invention may be used in any application including, but not limited to: packaging printing (flexible, cartonboard and corrugated), metal decoration printing (including metal can packaging), textiles printing, and décor printing. Inks prepared using OH-PUDs according to the invention have been successfully printed using various printheads, including Kyocera KJ4B-1200-M16ST, onto various substrates, including flexible films such as polyester and polypropylene (used in flexible packaging), cartonboard (such as Invercote G, ex. Iggesund) and cotton-rich textiles (such as Panama, ex. Premier Textiles). In all instances the inks jetted reliably, with open times in excess of 60 minutes, and the prints achieved resistances suitable for the application. In the case of the textile prints, curing the prints at temperatures in excess of 100°C produced prints of further enhanced wash resistance and wet rub resistance.

There is no particular restriction on how the PUDs used in the invention are prepared, beyond what has previously been described and according to what follows.

As mentioned previously, the polyurethane precursor may be prepared from any blend of diisocyanates and diols, where the diols can include, but are not limited to: polyester diols, polycarbonate diols, polyether diols and polyacrylic diols; polycarbonate diols being preferred. Diisocyanates used in the preparation of the PUDs used in the invention may be aliphatic or aromatic types including, but not limited to Isophorone diisocyanate, hexamethylene-1,6-diisocyanate, Tetramethylxylylene diisocyanate, methylene diphenyl diisocyanate, hydrogenated methylene diphenyl diisocyanate, toluene diisocyanate.

Although the invention is preferably directed towards the preparation of linear PUDs, it also encompasses the possibility of branched PUDs. The approaches for preparing such branched polyurethanes are well known and can be achieved, for example, through the use of trifunctional (e.g. biuret HMDI trimers) isocyanates, trifunctional or higher functional polyols or trifunctional or higher functional primary and secondary amines. It should also be understood that the PUDs used in the inventive compositions may use difunctional amines in their synthesis to introduce urea linkages into the polyurethane backbone, which may further help the print resistance properties.

There is no restriction on whether the PUD is anionically or non-ionically stabilized, although anionically stabilized PUDs are preferred. In the first case, the PUD comprises acid groups as part of its polymeric structure, which after neutralization with a suitable base confer the anionic stabilization mechanism enabling its dispersion. A typical reagent used to introduce carboxylic acid groups into the PUD structure during its synthesis is dimethylpropionc acid (DMPA). Other diol reagents comprising one or more carboxylic acid groups may be used in the preparation of the PUD. In the case of non-ionically stabilized PUDs a hydrophilic segment is incorporated as part of the polyurethane dispersion (such as a poly(ethylene oxide)) to enable its dispersion. It should be understood that although the incorporation of such non-ionic groups is encompassed by the invention, it is not preferred due to the detrimental impact that such groups have upon the water resistance of prints of inks using such PUDs. Where the PUDs are anionically stabilized it is preferred that the acid value, based on the dry polymer weight, should be at least 10, and more preferably at least 20 mgKOH/g. To disperse anionic PUDs any suitable base may be used including organic and inorganic types to neutralize the acid groups, enabling it to be dispersed in water. Non-limiting examples of bases used to neutralize the carboxylic acid (or other acids) of the PUD include, but are not limited to: triethylamine, N,N-dimethylethanolamine, any other tertiary amine, potassium hydroxide, sodium hydroxide. It is preferred that tertiary amines are used to neutralize the carboxylic acid groups of the PUD and that the boiling point of the amine should most preferably be less than 200°C and more preferably less than 150°C and in a specific case less than 100°C. Preferably, the PUDs used in this invention are anionic and neutralized with a tertiary amine, preferably N,N-dimethylethanolamine and/or triethylamine.

Dispersion of PUDs may also be promoted by the use of anionic and non-ionic surfactants.

There is no particular restriction on the total solid content contributed by the PUD to the final aqueous (inkjet) printing ink composition. However, it is preferred that the total solid content contributed to the final ink formulation should be in the range 2.0-40%, and more preferably in the range 2.5-20%, and most preferably in the range 5-20% of the final ink composition, based on the dry polymer weight.

Where the compositions of the invention are intended for inkjet printing then they should preferably have viscosities, at 32°C, of less than 50 mPa.s, more preferably less than 25 mPa.s and most preferably less than 10 mPa.s. Preferably, the compositions of the present invention have a viscosity of from about 1 to about 10 10 mPa.s at 32°C.

The pH of the inks should preferably be in the range 5.0 to 10.0 and more preferably in the range 6.0 to 9.5.

The inks of the invention may optionally comprise any additional crosslinker including but not limited to those comprising the following reactive species; carbodiimides, oxazolines, azriridines, epoxies, amino resins (such as melamine-formaldehhydes), metal complexes (including titanate and zirconate organometallics, such as ammonium zirconium carbonate), isocyanates (including blocked isocyanates), epoxies. It should be understood that it is preferable that no crosslinker be used in the inventive ink compositions, to mitigate against the risk of the ink curing in an inkjet printhead and thereby potentially irreversibly blocking a portion of the printhead nozzles. Accordingly, in a preferred aspect of the invention, the composition is free from carbodiimides, epoxies, isocyanates, amino resins (e.g. melamine-formaldehyde) and aziridines. More preferably, the composition of the present invention is free of carbodiimides, oxazolines, azriridines, epoxies, amino resins (such as melamine-formaldehhydes), metal complexes (including titanate and zirconate organometallics, such as ammonium zirconium carbonate) and isocyanates (including blocked isocyanates). Even more preferably, the composition of the present invention is free of crosslinkers.

A further, optional, feature of the invention is that where any water-soluble organic solvent is used, it should preferably have a boiling point of less than 250°C, and more preferably less than 200°C. Where solvents with boiling points of greater than 200°C are used their concentration in the ink should preferably be less than 10.0% and more preferably less than 5.0%. The total concentration of water-soluble organic solvents should preferably be less than 35.0%, and more preferably less than 30.0% of the ink composition. A further optional feature of the invention is that the ink compositions comprise as a water-soluble organic solvent, 3-methoxy-3-methyl-1-butanol (MMB). This is an advantageous solvent, as its heat of vaporization, of around 385 J/g, is significantly lower than that of propylene glycol which is in excess of 700 J/g, whilst the boiling points are relatively close at around 175°C for MMB and 187°C for propylene glycol.

Where the compositions of the invention are intended for inkjet printing, they may be printed via multipass or single pass inkjet printing processes.

For inkjet printing the inks of the invention may be printed onto any substrate, which in some cases may be pre-coated with a suitable primer composition to enhance the print quality. Such primers typically comprise a multivalent metal salt which helps to 'fix' the ink, reducing print quality issues such as drop spread and intercolor bleed. Although primers do not form part of the invention, any suitable primer enhancing the print quality achievable with the inventive inks may be used.

Without going into detail of their manufacture the invention encompasses aromatic and aliphatic PUDs and further encompasses PUDs produced from polyether diols, polyester diols, polyacrylic diols, polycarbonate diols and any aliphatic or aromatic diol or any blend or hybrid thereof. Polycarbonate diols are a preferred class of prepolymer diol used in the preparation of the PUDs of the invention. As previously stated, the PUDs may be anionic or non-ionic in terms of their stabilization, or a combination of the two stabilization mechanisms, with anionic PUDs being preferred. Anionic PUDs are commonly produced by the inclusion of a carboxylic acid into the polymer structure of the PUD, for example by the urethane reaction of dimethylol propionic acid ('DMPA'). Where DMPA, or other acid-containing species, is incorporated into the PUD backbone then it may be neutralized with any organic or inorganic base to enable the anionic stabilizing mechanism. Where such PUDs containing acid groups are prepared there is no restriction on the acid value of the PUD. The acid value of the PUD may be between 0 and 100 mgKOH/g, based on the dry polymer weight of the PUD, and preferably between 10 and 50 mgKOH/g. It is the control of the particle size and hydroxyl content of the PUDs of the invention that provides the inks with the balance of ink resolubility and print water (wet rub) resistance that has not previously been achieved in the prior art, especially for the compositions preferably comprising relatively low concentrations of high boiling point co-solvents, such as glycerol.

To disperse the PUDs into water the pendant carboxylic acids are neutralized with a suitable base, typically a tertiary amine or an inorganic base such as sodium or potassium hydroxide. Organic amines are the preferred neutralizing bases used in the preparation of the PUDs of the invention and tertiary amines having boiling points less than 150°C, such as the non-limiting examples of triethylamine and N,N-dimethylethanolamine, are preferred.

The inventor hypothesizes that the nature of the base used to neutralize the carboxylic acid groups of the PUD may play a role in enabling the dispersion of the PUD in water. For instance, the inventor has found that if an involatile base, such as triethanolamine (boiling point = 335°C), glucosamine (boiling point = 450°C) or potassium hydroxide is used to neutralize a PUD, then the water resistance of ink prints made on these PUDs is poor. The inventor hypothesizes that this is due to the permanence of the carboxylate salt, which leads to increased water sensitivity of any print. Where amines such as N,N'-dimethylethanolamine (boiling point = 133°C) and even more so, triethylamine (boiling point = 89°C) are used to neutralize the carboxylic acid groups of the PUD then the inks of the invention can produce prints having good water resistance. The inventor hypothesizes that this is due to the evaporative evolution of the more volatile tertiary amines so that the PUD reverts to the carboxylic acid and hence a print with higher water resistance.

Preferably, the PUDs used in the present invention are anionically stabilized PUDs. Preferably, the anionically stabilized PUDs are neutralized with an organic base, preferable an amine base. Preferably, the anionically stabilized PUDs are neutralized with an amine base having a boiling point of less than 150 °C. Preferably, the anionically stabilized PUDs are neutralized with N,N'-dimethylethanolamine or triethylamine.

Although not an essential feature, inks prepared according to the invention may also optionally include any further water-soluble, alkali-soluble or water-dispersible resin, other than the OH-PUD. Additional resins include, but are not limited to; polyurethane dispersions, self-crosslinking polyurethane dispersions, alkali-soluble acrylics, acrylic dispersions, self-crosslinking acrylic dispersions, polyester dispersions, poly(vinyl acetate) and copolymers of vinyl acetate dispersions, poly(vinyl alcohols), poly(vinyl pyrrolidones). Any skilled in the art could modify inks prepared according to the invention through the addition of additional resins but such modifications would fall within the spirit of the invention.

There is no restriction on the total amount of resin binder (i.e., OH-PUD and any optional additional water-soluble, alkali-soluble or water-dispersible resin) that can be used in inks prepared according to the invention, but this may be in the range 2.5-40%, more preferably in the range 2.5-30.0% and most preferably, especially for aqueous inkjet printing inks, in the range 2.5-20.0% of the total ink composition, based on the dry combined weight of the PUD and any other resin.

Use of the OH-PUD according to the invention allows highly resoluble inks to be prepared without recourse to the use of concentrations of co-solvents having boiling points in excess of 200°C and especially 250°C, such as glycerol and diethylene glycol, amongst others, of greater than 35.0%. The use of such involatile solvents (i.e., those having boiling points in excess of 200°C) at concentrations often more than 35% of the ink formulation is a commonly used approach for inkjet printing inks, not only to raise the viscosity of the ink but also to ensure that the ink has acceptable resolubility. However, the use of such high boiling point solvents has the associated disadvantage of causing slow drying of the inks, which is undesirable for high throughput printing. Although such high boiling point co-solvents may be used as part of the inventive ink compositions of the invention, it is possible to prepare inkjet inks with a reduced requirement for such high boiling point solvents. Therefore, inks comprising solvents with boiling points of less than 250 °C, and more preferably less than 200°C, with excellent resolubility can be prepared using the current invention. Further to this, it is again common for aqueous inkjet inks to comprise co-solvents at concentrations in excess of 35% of the ink composition. Inks according to the invention can be prepared with solvent concentrations of less than 40%, more preferably less than 35%, more preferably less than 30% and even more preferably 25% or less of the ink composition, especially so with solvents having boiling points of less than 200°C. A further aspect of the invention is that the concentration of water-soluble solvents having heats of vaporization of greater than 500 J/g should preferably be less than 30%. An optional feature of the inks is that they may comprise the solvent 3-methoxy-3-methyl-1-butanol (MMB).

The printing inks of the invention may optionally comprise any water-soluble organic co-solvent, according to what has previously been described. Although volatile solvents such as ethanol, propanol and isopropanol may be used, where the inks are intended for inkjet printing it is preferred that those which are not highly flammable or volatile should be used, typically a polyol, an alkylene glycol, an alkylene glycol ether or ether acetate type, with the following non-limiting examples: 4-hydroxy-4-methyl-2-pentanone, diethyelene glycol, diethylene glycol butyl ether, diethylene glycol ethyl ether, diethylene glycol methyl ether, diethylene glycol monoethyl ether acetate, diethylene glycol monopropyl ether, dipropylene glycol, dipropylene glycol ethyl ether, dipropylene glycol methyl ether, ethylene glycol butyl ether, ethylene glycol ethyl ether, ethylene glycol isopropyl ether, ethylene glycol methyl ether, ethylene glycol propyl ether, glycerine carbonate, N-methyl 2-pyrrolidone, glycerol, propylene glycol, propylene glycol ethyl ether, propylene glycol ethyl ether acetate, propylene glycol methyl ether, propylene glycol n-propyl ether, triethylene glycol, triethylene glycol butyl ether, triethylene glycol methyl ether, tripropylene glycol, tripropylene glycol methyl ether, N-methyl pyrollidone, urea, and the like. As mentioned previously, it is preferred that where such co-solvents are used, they should form less than 40%, preferably less than 35% and more preferably less than 30.0% of the ink composition. Furthermore, it is preferred that the concentration of solvents having boiling points of greater than 250°C should be less than 10.0% and more preferably less than 5.0% of the ink composition. Preferably, the concentration of solvents having heats of vaporization greater than 500 J/g should be less than 30% of the ink composition. A preferred solvent is 3-methoxy-3-methyl-1-butanol (MMB). Another preferred solvent is propylene glycol. Preferably, the inkjet compositions of the present invention comprise less than 30% propylene glycol and/or MMB.

Since the products of the current invention are primarily water-based in nature, it is also preferable to include a biocide or anti-mold agent. Suitable examples include products based on, but not limited to, the following biocide structural types: benz-isothiazolinone, bromo-nitro-propane-diol, isothiazolinone, ethylenedioxydimethanol, or iodo-propynyl butyl carbamate. Some commercially available grades include those marketed under the trade names Intercide (Akcros Chemicals) or Nipacide (Clariant). Other types of biocide that could be considered include sodium dehydroacetate (Geogard 111S from Lonza), sodium benzoate (Vancide 51 from R. T. VANDERBILT), sodium pyridinethiol- 1-oxide (Sodium Omadine from Arch Chemicals), sodium salt of o-phenylphenol (Dowicide A from DOW Chemical) and ethyl p-hydroxybenzoate (Nipastat Sodium from Aako). These are preferably used at an amount of 0.01 to 1.00% by mass in the ink composition.

Defoamers can also optionally be included in the formulation; these prevent the formation of foam during manufacture of the ink and also while jetting. Defoamers are particularly important with recirculating printheads. Examples of suitable defoamers include, but are not limited to, TEGO FOAMEX N, FOAMEX 1488, 1495, 3062, 7447, 800, 8030, 805, 8050, 810, 815N, 822, 825, 830, 831, 835, 840, 842, 843, 845, 855, 860, and 883, TEGO FOAMEX K3, TEGO FOAMEX K7/K8 and TEGO TWIN 4000 available from Evonik. Available from BYK are BYK-066N, 088, 055, 057, 1790, 020, BYK-A 530, 067A, and BYK 354. The additives DC62, DC65, DC 68, DC71 and DC74 are available from Dow Corning. Agitan 120, 150, 160, 271, 290, 298, 299, 350, 351, 731, 760, 761, and 777 are available from Munzing. Surfynol 104PA, AD01, DF-110, DF-58, DF-62, DF-66, DF-695, DF-70, and MD-20 are available from Evonik.

Surface control additives are often optionally used to control the surface tension of the ink, which is required to adjust the wetting on the face plate of the printhead, and also to give the desired wetting on the substrates onto which the inks are printed. They can also be used to control the level of slip and scratch resistance of the ink. Examples of suitable surface control additives include but are not limited to TEGO FLOW 300, 370, and 425, TEGO GLIDE 100, 110, 130, 406, 410, 411, 415, 420, 432, 435, 440, 482, A115, and B1484, TEGO GLIDE ZG 400, TEGO TWIN 4000 and 4100, TEGO WET 240, 250, 260, 265, 270, 280, 500, 505, and 510 and TEGO WET KL245, all available from Evonik. Available from BYK are BYK 333 and 337, BYK 378, 347 and 361, CERAFLOUR 998 and 996, NANOBYK 3601, 3610, and 3650, and CERMAT 258. Surfynol 104, 420, 440, 465, 485, 61, 82, and 2502 are available from Evonik. Multiwet BD, EF, SU, SO, and VE are available from Croda. Capstone FS-30, 31, 34, 35, 50, 51, 60, 61, 63, 64, 65, and 3100 are available from Alfa Chemicals.

Included in the ink formulation can optionally be a suitable de-aerator. These prevent the formation of air inclusions and pinholes in the cured ink. These also reduce rectified diffusion, which can cause reliability issues in the printhead. Non-limiting examples include the 'Agitan^{™}' range available from Munzing.

The ink compositions of the present invention may optionally contain one or more colorants, including pigments and/or dyes. Examples of suitable organic or inorganic pigments include carbon black, zinc oxide, titanium dioxide, phthalocyanine, anthraquinones, perylenes, carbazoles, monoazo and disazobenzimidazoles, rhodamines, indigoids, quinacridones, diazopyranthrones, dinitroanilines, pyrazoles, diazopyranthrones, pyrazoles, dianisidines, pyranthrones, tetracholoroisoindolines, dioxazines, monoazoacrylides and anthrapyrimidines. The dyes include but are not limited to azo dyes, anthraquinone dyes, xanthene dyes, azine dyes, combinations thereof and the like.

Commercial organic pigments classified according to the Color Index International may be used, including, but not limited to, those according to the following trade designations: blue pigments PB1, PB15, PB15:1, PB15:2, PB15:3, PB15:4, PB15:6, PB16, PB60; brown pigments PB5, PB23, and PB265; green pigments PG1, PG7, PG10 and PG36; yellow pigments PY3, PY14, PY16, PY17, PY24, PY65, PY73, PY74 PY83, PY95, PY97, PY108, PY109,PY110, PY113, PY128, PY129, PY138, PY139, PY150, PY151, PY154, PY156, PY175, PY180 and PY213; orange pigments PO5, PO15, PO16, PO31, PO34, PO36, PO43, PO48, PO51, PO60, PO61 and PO71; red pigments PR4, PR5, PR7, PR9, PR22, PR23, PR48, PR48:2, PR49, PR112, PR122, PR123, PR149, PR166, PR168, PR170, PR177, PR179, PR190, PR202, PR206, PR207, PR224 and PR254: violet pigments PV19, PV23, PV32, PV37 and PV42; black pigments PBk1, PBk6, PBk7, PBk8, PBk9, PBk10, PBk11, PBk12, PBk13, PBk14, PBk17, PBk18, PBk19, PBk22, PBk23, PBk24, PBk25, PBk26, PBk27, PBk28, PBk29, PBk30, PBk31, PBk32, PBk33, PBk34, PBk35, NBk1, NBk2, NBk3, NBk4, NBk6; combinations thereof, and the like.

The pigments are milled to typically less than 1 micrometer after milling with a preferred particle size distribution of 10-500 nm, more preferably 10-350 nm to have better transparency and a wide color gamut.

In order to incorporate the above-described pigments into the inventive compositions, it is preferable that the pigments are manufactured and stably stored as a pigment concentrate in water. This is typically achieved by dispersing the pigment into a water-soluble or water-dispersible resin using a water-soluble and/or a water-dispersible surfactant which introduces hydrophilic functional groups into the surface of the pigment particles. Examples of these dispersing resins are numerous and could include polyvinyl alcohols, non-ionic polyurethane dispersions, polyacrylic acid, acrylic acid-acrylonitrile copolymers, vinyl acetate-acrylate copolymers, acrylic acid-acrylate copolymers, styrene-acrylic acid copolymers, styrene-methacrylic acid copolymers, styrene-methacrylic acid-acrylate copolymers, styrene-alpha methyl styrene-acrylic acid copolymers, styrene-alpha methyl styrene-acrylic acid-acrylate copolymers, styrene-maleic acid copolymers, styrene-maleic anhydride copolymers, vinyl naphthalene-acrylic acid copolymers, vinyl naphthalene-maleic acid copolymers, vinyl acetate-maleate copolymers, vinyl acetate-crotonic acid copolymers, and vinyl acetate-acrylic acid copolymers, and the salts thereof. The copolymers can be used in any form of random copolymer, block copolymer, alternating copolymer and graft copolymer. Examples of such resins include Joncryl 67, 674, 678, 8500, 586, 611, 680, 682, 683 and 69 available from BASF. These resins are commonly neutralized with ammonia to enable the preparation of polymer solutions. It is also possible to neutralize such resins with any other organic amine, or indeed an inorganic base. Also encompassed by the invention are pigment dispersants based on rosin esters (e.g., modified rosin resins), such as the Procol range (Megara Resins). Again, solutions of these polymeric anionic dispersants are prepared by neutralizing the carboxylic acid groups with a suitable base, such as ammonia, an amine or an inorganic base. Preferably, the pigment dispersant comprises an ammonia neutralized rosin resin.

Pigment dispersions prepared using copolymers of styrene and maleic anhydride (or acid) are especially preferred classes of pigment dispersion used in the inventive ink compositions. Where such dispersants are used, it is preferred that the molar ratio of styrene to maleic anhydride should be 2:1, or greater, and that the weight average molecular weight should be 5,000, or greater. It is further preferred that aqueous solutions of such styrene:maleic anhydride copolymers be prepared by neutralization with ammonia, or an organic base such as triethylamine, ethanolamine or aminomethyl propanol.

As used herein, unless stated otherwise, a copolymer of styrene and maleic anhydride is typically prepared by the free radical copolymerization of styrene and maleic anhydride monomers. Preferably, the anhydride residues of the copolymer are then ring opened by neutralization with the appropriate base.

Preferably, the inventive ink compositions are prepared using pigment dispersions prepared using polymeric anionic dispersants based on rosin esters and/or styrene-maleic anhydride copolymers.

Examples of surfactants used for the pigment dispersion include, but are not limited to, anionic surfactants such as alkane sulphonates, alpha-olefin sulphonates, alkyl benzene sulphonates, alkyl naphthalene sulphonates, acyl methyl taurinates, dialkyl sulfosuccinates, alkyl sulfates, sulfurized olefins, polyoxyethylene alkyl ether phosphates, polycarboxylic acids and mono glycerol phosphate, amphoteric surfactants such as alkylpyridinium salts and non-ionic surfactants such as polyoxyethylene alkyl ethers, polyoxyethylene alkyl phenyl ethers, polyoxyethylene alkyl esters, polyoxyethylene alkyl amides, glycerol alkyl esters and sorbitan alkyl esters. Examples include EFKA 1000, 4000, 5000 and 6000 series products from BASF, Tamol series products from Dow, and Solsperse 27,000, 40,000, 44,000, 46,000 and 47,000 from Lubrizol.

Inkjet compositions prepared according to the invention are suitable for printing by either multipass or single-pass operations, terms well understood within the industry. The applications that are covered by the invention include, but are not limited to, the multipass printing of textiles, including cotton-rich fabrics, the single-pass printing of textiles, the multipass printing of packaging, including cartonboard, the single pass printing of packaging, including labels, corrugated, cartonboard and flexible packaging, the single pass and multipass printing of metal substrates including metal decoration of cans and décor printing. Inkjet compositions prepared according to the invention are also ideally suited to the multipass graphics printing market. For the graphics market inventive inkjet compositions may be printed onto any flexible or rigid substrate including, but not limited to: paper, vinyl, acrylic, polystyrene, polycarbonate, metals, etc. The inventor has shown that inkjet inks of the invention have excellent performance on vinyl, acrylic and polycarbonate substrates used in the multipass inkjet graphics market. Although directed towards inkjet compositions the invention also lends itself to aqueous flexographic and gravure inks.

In all cases the printing of inventive inkjet compositions may be preceded by the application of a print-receptive primer to the substrate to be printed. The substrates to be printed, especially packaging substrates including polyester films, polypropylene films, nylon films, cellulose acetate films, polyethylene films, aluminum foils, metal sheets and rolls and any coated derivative thereof may be further treated prior to printing via corona discharge or plasma treatments to enhance the adhesion and print receptivity. Likewise, the printed material may be subject to further operations to realize a final product, including but not limited to, over-lacquering, lamination, etc. For the packaging market, the printing inks of the invention lend themselves to the preparation of laminates where the laminates may be produced by adhesive or thermal lamination processes. Those skilled in the art will be aware of the various processes and detail of such processes that will enable the inks of the invention to perform properly in the afore-mentioned markets.

As indicated above, to enhance the print receptivity of substrates printed via inkjet they may be coated prior to printing with a primer composition. There is no restriction on the use of, or type of primer composition, but those comprising a multivalent salt, such as calcium chloride, calcium acetate, magnesium chloride, magnesium acetate, aluminum sulphate, etc. may be used. Primers comprising cationic polymers, such as cationic polyurethane and cationic styrene-(meth)acrylate dispersions may also be used. Primers comprising anionic polymers such as solution acrylics and styrene-(meth)acrylate dispersions may be used. Primers comprising amino acids are also encompassed by the invention. Such primers work with inkjet inks of the invention by helping to 'fix' the print design, reducing issues such as dot gain, line spread, inter-color bleed, mottle and graininess. Various types of primer and their use in the control of the print quality of pigmented aqueous inkjet printing inks are well known in the art. Therefore, in a further optional embodiment of the invention, inkjet printing inks according to the invention are printed onto substrates which have been pre-coated with such primers.

The present invention has been described in detail, including the preferred embodiments thereof. However, it will be appreciated that those skilled in the art, upon consideration of the present disclosure, may make modifications and/or improvements on this invention that fall within the scope and spirit of the invention.

### Terms

As understood in the art, the term alkali-soluble polymer (e.g., alkali-soluble styrene-(meth)acrylic copolymer) typically refers to polymers or copolymers typically comprising acid groups as part of the monomer blend. When the acidic groups of the polymer are neutralized with an organic base (e.g., amines such as triethylamine or triethanolamine) or inorganic bases (e.g. NaOH, KOH), the polymers can then be dissolved in water to form an aqueous solution. Alkali-soluble polymers may also be referred to as solution polymers.

As used herein, unless stated otherwise, an involatile base is an inorganic base such as potassium hydroxide, or an organic base typically having a boiling point in excess of 150°C.

Unless stated otherwise, all percentages (%) are by weight.

Boiling point: Unless stated otherwise, all boiling points are measured under standard atmospheric pressure of 101 kPa.

Heat of Vaporization: This is defined as the amount of energy (enthalpy) that must be added to a liquid substance to transform a quantity of that substance into a gas. For the purposes of the present disclosure, the enthalpy of vaporization is given at the normal boiling temperature of the substance in question, wherein the normal boiling point is the boiling point of a substance at one atmosphere pressure.

Unless stated otherwise, as used herein, room temperature is 20 °C.

Hydroxyl Value (OHV): This is defined as the number of milligrams of potassium hydroxide required to neutralize the acetic acid taken up on acetylation of one gram of a chemical substance that contains free hydroxyl groups. The hydroxyl value is suitably measured in accordance with the ISO 4629-1:2016(E).

Acid Value (AV): The mass of potassium hydroxide (KOH) in milligrams that is required to neutralize one gram of chemical substance. Unless stated otherwise, reference to the acid value is to the total acid value and is suitably measured in accordance with ISO 2114:2000(E) (method B) standard.

Molecular weight: Unless stated otherwise, molecular weight and average molecular weight refer to weight average molecular weight (Mw). Weight average molecular weights are determined (including for the PUDs of the invention) using gel permeation chromatography (GPC). Preferably, molecular weight is measured by comparison with a a monodisperse polystyrene equivalent molecular weight calibration standard. For instance, molecular weight determination may be conducted on a Hewlett-Packard 1050 Series HPLC system equipped with two GPC Ultrastyragel columns, 103 and 104 Å (5 µm mixed, 300 mm x 19 mm, Waters Millipore Corporation, Milford, MA, USA) and THF as mobile phase. The flow rate in the columns is 1.0 ml/min and a column temperature 40°C, a differential refractive index detector (RI) and a UV-detector (254nm) are typically used. The skilled person will appreciate that this definition of molecular weight applies to polymeric materials which typically have a molecular weight distribution.

Particle size/average particle size. Unless stated otherwise, the terms "particle size" or "average particle size" refer to the Z-average i.e. the harmonic mean from the intensity-weighted distribution as measured by dynamic light scattering (DLS), as defined in ISO 22412:2017(E). Unless stated otherwise, water is preferably used as the solvent and measurements are taken at room temperature 20 °C.

Viscosity: Unless stated otherwise, viscosity of the inks was measured at 32°C using a Brookfield DV-II+ Pro Viscometer equipped with Spindle no.18, at 100rpm and expressed in millipascal-seconds (mPa.s).

pKb: As will be understood by the skilled person, pKb = -logKb, wherein Kb is the base dissociation constant. pKb may be suitably measured by titration at room temperature (i.e., 20 °C).

pH: Unless stated otherwise, pH was measured at 25°C using an Oakton 510 series pH meter.

### EXAMPLES

The invention is further described by the following non-limiting examples which further illustrate the invention, and are not intended, nor should they be interpreted to, limit the scope of the invention.

### Materials

Tegowet KL245: A surfactant (ex. Evonik).

Propylene glycol (PG): A water soluble co-solvent, with a boiling point of about 188°C and a heat of vaporization of about 880 J/g.

MMB (3-methoxy-3-methyl-1-butanol): A water soluble co-solvent, with a boiling point of about 174°C and a heat of vaporization of about 384 J/g.

Cyan Pigment Dispersion A: An aqueous dispersion of cyan 15:3 pigment, comprising about 13.5% pigment, and a polymeric anionic dispersant, wherein the anionic dispersant comprises poly(ethylene glycol) groups as part of its structure.

Cyan Pigment Dispersion B: An aqueous dispersion of cyan 15:3 pigment, comprising about 20% pigment, and an anionic dispersant based on a copolymer of styrene and maleic anhydride, with an approximate weight average molecular weight of 9,500 and a styrene to maleic anhydride molar ratio of about 3:1. This copolymer was neutralized with a blend of ammonia and aminomethyl propanol.

Cyan Pigment Dispersion C: An aqueous dispersion of cyan 15:3 pigment, comprising about 20% pigment, and a blend of the two dispersants used to prepare Dispersion A and Dispersion B.

Cyan Pigment Dispersion D: Similar to dispersion B, but using a styrene-maleic anhydride copolymer of higher molecular weight.

Cyan Pigment Dispersion E: Similar to dispersion B, but replacing the aminomethyl propanol with ethanolamine.

Cyan Pigment Dispersion F: Similar to dispersion B, but neutralized solely with ammonia.

Cyan Pigment Dispersion G: An aqueous dispersion of cyan 15:3 pigment, comprising about 46% pigment, and a polymeric anionic dispersant, wherein the anionic dispersant is an ammonia neutralized solution of a styrene acrylic copolymer.

Cyan Pigment Dispersion H: Similar to cyan pigment dispersion G, but wherein the anionic dispersant was prepared using ethanolamine as the neutralizing base.

Yellow Pigment Dispersion A: An aqueous dispersion of yellow 13 pigment, comprising about 39% pigment, and an anionic polymeric dispersant, wherein the anionic dispersant is an ammonia neutralized solution of a modified rosin ester.

Black Pigment Dispersion A: An aqueous dispersion of pigment black 7 pigment, comprising about 39% pigment, and an anionic polymeric dispersant, wherein the anionic dispersant is an ammonia neutralized solution of a modified rosin ester.

PUDs used in the Examples: Table 1 provides the details of the PUDs used in the preparation of aqueous ink compositions suitable for inkjet compositions fulfilling the requirements of the invention as previously laid out. The PUDs of Table 1 all had solid contents of about 38-40%.

**Table 1: Details of the PUDs used in the Preparation of Aqueous Inks Suitable for Inkjet Printing**

| PUD | Diol³ | Neutralising Amine⁴ | MW (M_{w})¹ | Avg Particle Size¹ (nm) | Approx. OHV (mgKOH/g (dry) |
|---|---|---|---|---|---|
| PUD-A⁵ (Comp) | PC | TEA | 39000 | < 25 | 0 |
| PUD-1 (Comp) | PE | DMEA | 5000 | < 25 | 170 |
| PUD-2 (Inv) | PE | DMEA | 10000 | 40 | 55 |
| PUD-3 (Comp) | PC | DMEA | ND | >100 | 105 |
| PUD-4 (Comp) | PC | TEA | 15000 | 75 | 55 |
| PUD-5 (Comp) | PC | TEA | 15000 | 66 | 55 |
| PUD-6 (Inv) | PE | DMEA | >50000 | 45 | 30 |
| PUD-7 (Inv) | PC | TEA | 15000 | 30 | 30 |

| | | | | | |
|---|---|---|---|---|---|
| Notes to Table 1: ¹Weight average molecular weights and particle sizes for the PUDs were determined according to the description; ³Diol refers to the prepolymer diol used in the manufacture of the PUD (PE refers to a polyester diol, PC to a polycarbonate diol); ⁴In the examples here, two different tertiary amines were used to neutralize the carboxylic acid groups of the PUD. DMEA refers to N,N-dimethylethanolamine and TEA refers to triethylamine; ⁵PUD-A is representative of a PUD with negligible hydroxyl content. Such a PUD is mentioned as suitable in various references for inkjet printing. Its solid content is around 24%. Formulations comprising this PUD were adjusted to equivalent solid content in the ink. For example, for compositions comprising 25% of PUD-1 to PUD-7, the equivalent amount of PUD-A was 41.7%. | | | | | |

### Tests Methods

Viscosity of the inks was measured at 32°C using a Brookfield DV-II+ Pro Viscometer equipped with Spindle no.18, at 100rpm and expressed in millipascal-seconds (mPa.s).

Resolubility Testing: Approximately 60µm ink films were applied to glass slides using a No. 6 K-Bar applicator (ex. RK Print). The inks were then dried for 30 minutes at 40°C, before being immersed in an aqueous solution comprising 25% propylene glycol, 0.2% Tegowet KL245 and 0.1% of triethanolamine Resolubility was assessed as; 'Highly Resoluble' (the dried ink film dispersed in the soaking fluid in less than 3 minutes, with no visible signs of any undissolved ink), 'Resoluble' (the dried ink film dispersed in the soaking fluid in 3 to 5 minutes, with no visible signs of any undissolved ink), 'Slowly Resoluble' (the dried ink film dispersed in the soaking fluid within 30 minutes, with no visible signs of any undissolved ink), 'Partially Resoluble' (the dried ink film disperses in the soaking fluid within 30 minutes, with visible signs of undissolved ink), 'Insoluble (the dried ink film shows little visible evidence of dispersing in the soaking fluid within 30 minutes).

Print Preparation: The inks were applied to a rigid acrylic substrate typical of that used in the inkjet graphics printing industry at 8µm, using a K-Bar applicator (ex. RK Print). Prints were heat-dried for 2 minutes at 70°C.

Water Resistance: The water resistance of the prints was determined by rubbing the print dried at 70°C for 2 min. with a cotton wool bud soaked in water. The number of double rubs required to remove or disrupt the print was then recorded; this is a test well known in the industry. It should be noted that water resistance is not a required property for all end-use applications. For example, inks laminated or overprinted with a protective coating would not require robust water resistance. For applications not requiring water resistance (e.g. Examples 11-13), anionic polymeric dispersants would not be required.

Throughout the examples, % of materials refers to weight %.

Table 2 shows the results for the PUDs of Table 1 used to prepare inks with Cyan Pigment Dispersion A.

**Table 2: Ink Examples showing the benefits of using OH-PUDs for applications where water resistance is not required**

| Ink Example | Ex CA (comp) | Ex C1 (comp) | Ex. I1 (comp) | Ex C2 (comp) | Ex C3 (comp) | Ex C4 (comp) | Ex 12 (comp) | Ex 13 (comp) |
|---|---|---|---|---|---|---|---|---|
| PUD | PUD-A | PUD-1 | PUD-2 | PUD-3 | PUD-4 | PUD-5 | PUD-6 | PUD-7 |
| Viscosity | 6.75 | 5.64 | 5.61 | 6.03 | 5.19 | 5.25 | 5.82 | 5.88 |
| pH | 7.90 | 7.50 | 7.30 | 7.75 | 6.90 | 6.85 | 7.40 | 7.50 |
| Ink Resolubility | Insoluble | Highly Resoluble | Highly Resoluble | Insoluble | Insoluble | Insoluble | Slowly Resoluble | Highly Resoluble |

| | | | | | | | | |
|---|---|---|---|---|---|---|---|---|
| Composition of the inks in Table 2: 19.8% deionized water; 25.0% propylene glycol; 0.2% Tegowet KL245; 25.0% of the polymer dispersion; and 30.0% of Cyan Pigment Dispersion A. | | | | | | | | |

The first thing to note from Table 2 is the resolubility result for the ink comprising PUD-A, the PUD with no hydroxyl content (Example CA). This ink was totally insoluble in the soaking fluid and as such poses potential problems for the possible blocking of printheads.

This is even though the molecular weight of this PUD is relatively low (Mw = 39000) and falling within the bounds suggested by various references for use in inkjet applications.

Table 2 further shows that OH-PUDs which fall within the hydroxyl value (< 60 mgKOH/g) and particle size requirements (< 60nm) of the invention produce inks with good resolubility. The OH-PUDs having particle sizes greater than 60nm, even where the hydroxyl value was high (105 mgKOH/g for PUD-3, Example C2), produced inks with poor resolubility.

**Table 3: Ink Examples showing the Benefits of Using OH-PUDs, according to the Invention, along with pigment dispersions prepared using copolymers of styrene and maleic anhydride for water resistance properties.**

| Ink Examples' | Ex C5 (comp) | Ex 14 (inv) | Ex C6 (comp) | Ex C7 (comp) | Ex C8 (comp) | Ex 15 (inv) | Ex 16 (inv) |
|---|---|---|---|---|---|---|---|
| PUD | PUD-1 | PUD-2 | PUD-3 | PUD-4 | PUD-5 | PUD-6 | PUD-7 |
| Viscosity | 5.13 | 5.13 | 5.88 | 5.07 | 5.40 | 5.88 | 5.31 |
| pH | 8.75 | 8.15 | 8.60 | 7.45 | 7.45 | 8.00 | 8.65 |
| Ink Resolubility | Highly Resoluble | Highly Resoluble | Insoluble | Partially Resoluble | Partially Resoluble | Slowly Resoluble | Highly Resoluble |
| Water Resistance | 40 | 60 | 30 | >100 | >100 | >100 | >100 |
| Tackiness Rating^{B} | Tack-Free | Tack-Free | Tack-Free | Tack-Free | Tack-Free | Tack-Free | Tack-Free |

| | | | | | | | |
|---|---|---|---|---|---|---|---|
| Notes to Table 3: ^{A}Composition of the inks in Table 3: 29.8% deionized water; 25.0% propylene glycol; 0.2% Tegowet KL245; 25.0% of the polymer dispersion; and 20.0% of Cyan Pigment Dispersion B. ^{B}The tackiness rating was determined on the prints dried at 70°C. It involved depressing a finger onto the print surface and qualitatively assessing how tacky the print was. The rating system used was very tacky; tacky; slightly tacky; and tack-free. | | | | | | | |

The Examples in Table 3 are for applications where water resistance is required. The results in Table 3 show the benefit of using a pigment dispersion prepared using an anionic dispersant that is a copolymer of styrene and maleic anhydride, with inks producing tack-free prints having good water resistance (i.e. ≥ 45 rubs). Furthermore, it confirms the importance of low particle size of OH-PUDs in contributing to ink resolubility. C6, the composition prepared using PUD-3, with a high OHV of 105 mgKOH/g, but an average particle size in excess of 100nm produced an ink with very poor resolubility. It may well have been anticipated from the prior art that an OH-PUD with such a high hydroxyl value would be resoluble. Comparing C7 and C8 with I6 reinforces the importance of particle size. The OH-PUDs used in the preparation of these inks, PUD-4, PUD-5 and PUD-7 respectively, have very similar properties, other than the particle size. PUD-4 with an average particle size of 75nm; and PUD-5 with an average particle size of 66nm, produces inks with poor resolubility; whereas PUD-7 with an average particle size of 30nm produces a highly resoluble ink. It should be noted that PUD-7, even though having a lower hydroxyl value (~30 compared with 55 mgKOH/g), not only produced inks with better resolubility but also prints with overall better water resistance. Again, PUD-6 (Ex. I5), though having a weight average molecular weight in excess of 50,000 and a hydroxyl value of only 30 mgKOH/g, by way of its low particle size was able to produce an ink with a degree of resolubility. C5 is the best of the comparative examples in Table 3, but exhibits inferior water resistance due to the high hydroxyl value of PUD-1.

Table 4 shows how PUD-7 can be used in inks using pigment dispersions prepared with polymeric anionic dispersants, other than copolymers of styrene and maleic anhydride. In this case, the anionic dispersants used in the preparation of the pigment dispersions were solutions of a styrene acrylic copolymer (for comparison) or a rosin ester derivative, where the dispersants were neutralized with either ammonia or ethanolamine to enable the aqueous solutions to be produced.

**Table 4: Inventive Compositions Comprising PUD-7 and Pigment Dispersions prepared using polymeric anionic dispersants**

| Ink Examples | Ex. IG (comp) | Ex. IH (comp) | Ex. II | Ex. IJ |
|---|---|---|---|---|
| Deionised water | 39.8 | 39.8 | 39.5 | 40.5 |
| Propylene Glycol | 25.0 | 25.0 | 25.0 | 25.0 |
| Tegowet KL245 | 0.2 | 0.2 | 0.2 | 0.2 |
| PUD-7 | 25.0 | 25.0 | 25.0 | 25.0 |
| Cyan Pigment Dispersion G | 10.0 | - | - | - |
| Cyan Pigment Dispersion H | - | 10.0 | - | - |
| Yellow Pigment Dispersion A | - | - | 10.3 | - |
| Black Pigment Dispersion A | - | - | - | 9.3 |
| Total | 100.0 | 100.0 | 100.0 | 100.0 |
| Viscosity | 5.28 | 5.31 | 5.76 | 5.04 |
| pH | 7.70 | 7.85 | 8.10 | 8.40 |
| Ink Resolubility | Highly Resoluble | Highly Resoluble | Highly Resoluble | Highly Resoluble |
| Water Resistance | >100 | 85 | >100 | >100 |
| Tackiness Rating | Tack-Free | Tack-Free | Tack-Free | Tack-Free |

Thus, the results of Tables 2, 3 and 4 confirm that resolubility of an ink composition is not only related to hydroxyl content and/or low molecular weight, but also the particle size. As mentioned previously, this is not something that has been suggested in the prior art.

**Table 5: Inventive Inks Comprising PUD-7 and Pigment Dispersions prepared using Copolymers of Styrene and Maleic Anhydride as Dispersants**

| Ink Examples | Ex I6 | Ex I7 | Ex I8 | Ex I9 | Ex I10 | Ex I11 |
|---|---|---|---|---|---|---|
| Pig. Disp. Type | B | C | B | D | E | F |
| Pig. Disp. amount | 20 | 22.5 | 25 | 25 | 25 | 25 |
| PUD-7 | 25 | 25 | 25 | 25 | 25 | 25 |
| DI Water | 29.8 | 27.3 | 24.8 | 24.8 | 24.8 | 24.8 |
| PG | 25 | 25 | 25 | 25 | 25 | 25 |
| Tegowet KL245 | 0.2 | 0.2 | 0.2 | 0.2 | 0.2 | 0.2 |
| Total | 100.0 | 100.0 | 100.0 | 100.0 | 100.0 | 100.0 |
| Viscosity | 5.31 | 6.30 | 6.39 | 8.07 | 6.54 | 6.54 |
| pH | 8.65 | 8.30 | 8.40 | 9.00 | 8.50 | 8.70 |
| Ink Resolubility | Highly Resoluble | Highly Resoluble | Resoluble | Resoluble | Resoluble | Resoluble |
| Water Resistance | >100 | 80 | >100 | >100 | >100 | >100 |
| Tackiness Rating | Tack-Free | Tack-Free | Tack-Free | Tack-Free | Tack-Free | Tack-Free |

The examples of Table 5 further exemplify various aspects of the invention (e.g. different ratios of dispersants; different molecular weight, different nature of neutralization), where PUD-7, with a hydroxyl value of around 30 mgKOH/g and an average particle size of 30nm, was used with various pigment dispersions prepared using dispersants derived from copolymers of styrene and maleic anhydride to produce inks with good resolubility yet able to produce inks with both good water resistance and low tack.

Table 6 shows how resoluble inks can be prepared with PUD-7 and Pigment Dispersion B, using different solvents and concentrations. The inks were prepared as previously laid out with the balance being made up with deionised water.

**Table 6: Inventive Ink Examples Comprising PUD-7 and Pigment Dispersion B, and varying concentrations of organic water-soluble cosolvents.**

| Ink Examples | Ex 112 | Ex I13 | Ex I14 | Ex I15 | Ex I16 | Ex I17 | Ex I18 |
|---|---|---|---|---|---|---|---|
| PUD-7 | 25 | 25 | 25 | 25 | 30 | 30 | 30 |
| Pig. Disp. B | 20 | 20 | 20 | 20 | 20 | 20 | 20 |
| PG | 25 | 20 | 15 | 10 | 7.5 | 5 | 7.5 |
| MMB | - | 5 | 10 | 10 | 7.5 | 5 | - |
| Tegowet KL245 | 0.2 | 0.2 | 0.2 | 0.2 | 0.2 | 0.2 | 0.2 |
| DI Water | 29.8 | 29.8 | 29.8 | 34.8 | 34.8 | 39.8 | 42.3 |
| Total | 100.0 | 100.0 | 100.0 | 100.0 | 100.0 | 100.0 | 100.0 |
| Initial Viscosity | 5.31 | 5.73 | 5.88 | 4.89 | 4.77 | 3.96 | 3.42 |
| pH | 8.65 | 8.90 | 8.95 | 8.90 | 8.90 | 8.90 | 8.90 |
| Aged Viscosity¹ | 5.22 | 5.67 | 5.82 | 4.83 | 4.68 | 3.81 | 3.24 |
| Ink Resolubility | Highly Resoluble | Highly Resoluble | Highly Resoluble | Highly Resoluble | Highly Resoluble | Highly Resoluble | Highly Resoluble |
| Water Resistance | >100 | >100 | >100 | >100 | >100 | >100 | >100 |
| Tackiness Rating | Tack-Free | Tack-Free | Tack-Free | Tack-Free | Tack-Free | Tack-Free | Tack-Free |

| | | | | | | | |
|---|---|---|---|---|---|---|---|
| Notes to Table 6: ¹The inks in this series were stored for 7 days at 50°c, and the viscosity was remeasured. This provides a good indication of the long-term stability of the inks. | | | | | | | |

Table 6 confirms that inks prepared according to the invention can be prepared at relatively low concentrations of co-solvents, such as PG and MM, yet still maintain their resolubility. This confirms the benefit of using OH-PUDs according to the invention. The benefits of inks having low concentrations of co-solvents on drying speeds yet maintaining good resolubility have been discussed in the description and should be clear to one skilled in the art.

Table 7: shows how inks can be prepared with varying concentrations of PUD-7 and Pigment Dispersion B, all with 25% of PG, thereby exemplifying the invention yet further.

**Table 7: Inventive Ink Compositions with Varying Concentrations of PUD-7 and Pigment Dispersion B**

| Example | I12 | I19 | I20 | 121 | I22 | I23 | I24 |
|---|---|---|---|---|---|---|---|
| PUD-7 | 25 | 35 | 10 | 25 | 25 | 25 | 40 |
| Pig. Disp. B | 20 | 20 | 20 | 25 | 30 | 40 | 10 |
| PG | 25 | 25 | 25 | 25 | 25 | 25 | 25 |
| Tegowet KL245 | 0.2 | 0.2 | 0.2 | 0.2 | 0.2 | 0.2 | 0.2 |
| DI Water | 29.8 | 19.8 | 44.8 | 24.8 | 19.8 | 9.8 | 24.8 |
| Total | 100.0 | 100.0 | 100.0 | 100.0 | 100.0 | 100.0 | 100.0 |
| Viscosity | 5.31 | 7.50 | 3.54 | 5.91 | 6.63 | 8.19 | 8.28 |
| pH | 8.65 | 8.70 | 8.70 | 8.75 | 8.70 | 8.80 | 8.65 |
| Ink Resolubility | Highly Resoluble | Resoluble | Slowly Resoluble | Resoluble | Resoluble | Resoluble | Highly Resoluble |
| Water Resistance | >100 | >100 | 50 | 80 | 70 | 60 | >100 |
| Tackiness Rating | Tack-Free | Tack-Free | Tack-Free | Tack-Free | Tack-Free | Tack-Free | Tack-Free |

The examples presented in Table 7 further exemplify the invention, with inks having PUD concentrations of between about 4-16% based on dry polymer weight, and pigment concentrations of between about 2-8%, based on the dry pigment weight. As expected, Example I20 exhibits the lowest water resistance (while still acceptable) due to the low amount of PUD.

To assess the jetting characteristics of the inventive compositions, Example I7 was prepared, and filtered through a 0.8µm pore size filter. The ink was then assessed on a laboratory printing rig equipped with a Kyocera KJ4B-1200-M16ST printhead.

The print set-up was as follows:
Print electronics: Kyocera
Print resolution 1200x1200dpi
Print speed: 75m/min (60kHz at 1200dpi)
Print method: Flatbed stage
Waveform: 4pl drop and tickle pulse on grey level 0, 28V
Print gap: 1.5mm
Ink recirculation rate: 50ml/min
Degassing: Separel G2 at -0.8bar
Jetting temp: 30°C

The ink jetted reliably with an open time in excess of 60 minutes, with no deviations. Solid blocks and images of this ink were printed onto a range of substrates, including; corona treated 23µm polyester film, corona treated 30µm oriented polypropylene film and the same films previously primed with a print receptive primer. The images were tack free and had water resistance in excess of 50 double wet rubs.

In a further printing test, the cyan ink was jetted onto untreated Panama cotton. The prints were then dried/cured at 150°C for 4 minutes. This simulates the curing conditions typical of aqueous pigmented textiles inkjet inks. After curing, the prints had excellent wash fastness and excellent dry and wet rub resistance, all attributes desirable of an aqueous pigmented textiles inkjet composition. The dry and wet rub resistance of the prints was assessed using a powered Crockmaster crockmeter, made by James Heal, fitted with standard crocking cloth (according to ISO 105-X12). No ink removal was observed when the print was rubbed 20 times under a 9N load for the dry rub test; or for 10 rubs for the wet rub test, using a crocking cloth soaked in deionized water. Wash resistance was assessed by immersing a 10x5cm area of the print in 100ml of a 2% solution of Persil biological laundry washing liquid, contained in a glass jar, and leaving the print in the detergent solution at 60°C, for 2 hours. The immersed print was shaken every 10 minutes and at the end of the 2-hour period no discolouration of the detergent solution was observed. It has been found that thermal curing the inks of the invention at temperatures above 100°C, and more so above 125°C results in prints with enhanced wash and solvent resistance. In the case of this ink this may well be due to an esterification crosslinking reaction between the OH-PUD and the styrene-maleic anhydride copolymer dispersant.

Thus, the use of the inventive ink compositions in textiles as well as packaging and graphics applications is supported by these findings.

## Claims

1. An aqueous inkjet composition comprising a hydroxy-functional PUD, wherein the PUD has an average particle size of ≤ 60nm and a hydroxyl content, based on the dry polymer weight, of ≤60 mgKOH/g,
wherein the composition further comprises an aqueous pigment dispersion prepared using an anionic dispersant, wherein the anionic dispersant is:
(i) a copolymer of styrene and maleic anhydride neutralized with a material selected from the group consisting of ammonia, aminomethyl propanol, ethanolamine or blends thereof; and/or
(ii) a rosin resin neutralized with ammonia.

2. The composition of claim 1, wherein the average particle size is 10-60nm; or 10-50nm; or 10-40nm; or 15-60nm; or 15-50nm; or 15-40nm.

3. The composition of claim 1 or 2, wherein the hydroxyl content is 10-60 mgKOH/g, preferably 20-60 mgKOH/g.

4. The composition of any preceding claim, wherein the PUD is prepared using a polycarbonate diol and/or wherein the PUD does not have a ketone or aldehyde group at one or more polymer chain ends.

5. The composition of any preceding claim, wherein the PUD is an anionic PUD, preferably wherein the PUD comprises carboxylic groups as part of its backbone and/or wherein the PUD has an average molecular weight of ≥ 10,000 Dalton, preferably ≥ 12,000 Dalton.

6. The composition of any preceding claim, wherein the PUD is neutralized with a tertiary amine having a boiling point of less than 150°C, preferably wherein the tertiary amine is N,N-dimethylethanolamine or triethylamine or a blend thereof, more preferably wherein the tertiary amine is triethylamine.

7. The composition of any preceding claim, wherein the anionic dispersant is a rosin resin neutralized with ammonia.

8. The composition of any of claims 1 to 6, wherein the anionic dispersant is a copolymer of styrene and maleic anhydride neutralized with a material selected from the group consisting of ammonia, aminomethyl propanol, ethanolamine or blends thereof preferably, wherein the copolymer of styrene and maleic anhydride is neutralized with ammonia.

9. The composition of any of claims 8 , wherein the weight average molecular weight of the styrene-maleic anhydride copolymer is ≥ than 5000.

10. The composition of any one or more of claims 8-9, wherein the styrene to maleic anhydride molar ratio of the styrene-maleic anhydride copolymer dispersant is ≥ 2:1, preferably ≥ 3:1.

11. The composition of any preceding claim, comprising a water-soluble organic solvent with a boiling point of less than 200°C, preferably wherein the amount of the water-soluble organic solvent is ≤ 30%; preferably wherein the total amount of water-soluble organic solvents having a boiling point ≥ 200°C is less than 5%.

12. The composition of claim 11, wherein the water-soluble organic solvent has a heat of vaporization ≤ 500 J g⁻¹ and/or wherein the solvent is 3-methoxy-3-methyl-1-butanol.

13. A method for printing an article, comprising printing the composition of any one or more of claims 1-12 onto a substrate and drying; preferably comprising a substrate suitable for the printing of packaging, food packaging, metal substrates, textiles, décor laminates and graphics.

14. The method of claim 13, wherein the printing press speed is ≥ 75 m/min.

15. Use of a hydroxy-functional PUD in an aqueous inkjet composition, wherein the PUD has an average particle size of ≤ 60nm and a hydroxyl content, based on the dry polymer weight, of ≤60 mgKOH/g, wherein the aqueous inkjet composition is resoluble wherein the aqueous inkjet composition is as defined in any one of claims 1 to 12.

## Patentansprüche

1. Wässrige Tintenstrahlzusammensetzung, umfassend ein hydroxyfunktionelles PUD, wobei das PUD eine mittlere Partikelgröße ≤ 60 nm und einen Hydroxylgehalt, bezogen auf das Trockenpolymergewicht, ≤ 60 mgKOH/g aufweist, wobei die Zusammensetzung ferner eine wässrige Pigmentdispersion umfasst, die unter Verwendung eines anionischen Dispergiermittels hergestellt ist, wobei das anionische Dispergiermittel Folgendes ist:
(i) ein Copolymer von Styrol und Maleinsäureanhydrid, neutralisiert mit einem Material ausgewählt aus der Gruppe bestehend aus Ammoniak, Aminomethylpropanol, Ethanolamin oder Gemischen davon; und/oder
(ii) ein mit Ammoniak neutralisiertes Kolophoniumharz.

2. Zusammensetzung nach Anspruch 1, wobei die mittlere Partikelgröße 10-60 nm; oder 10-50 nm; oder 10-40 nm; oder 15-60 nm; oder 15-50 nm oder 15-40 nm beträgt.

3. Zusammensetzung nach Anspruch 1 oder 2, wobei der Hydroxylgehalt 10-60 mg KOH/g, vorzugsweise 20-60 mg KOH/g beträgt.

4. Zusammensetzung nach einem der vorhergehenden Ansprüche, wobei das PUD unter Verwendung eines Polycarbonatdiols hergestellt ist, und/oder wobei das PUD an einem oder mehreren Polymerkettenenden keine Keton- oder Aldehydgruppe aufweist.

5. Zusammensetzung nach einem der vorhergehenden Ansprüche, wobei das PUD ein anionisches PUD ist, wobei das PUD vorzugsweise Carboxylgruppen als Teil seines Grundgerüsts umfasst, und/oder wobei das PUD ein mittleres Molekulargewicht von ≥ 10.000 Dalton, vorzugsweise ≥ 12.000 Dalton aufweist.

6. Zusammensetzung nach einem der vorhergehenden Ansprüche, wobei das PUD mit einem tertiären Amin mit einem Siedepunkt von weniger als 150 °C neutralisiert ist, wobei das tertiäre Amin vorzugsweise N,N-Dimethylethanolamin oder Triethylamin oder ein Gemisch davon ist, wobei das tertiäre Amin bevorzugter Triethylamin ist.

7. Zusammensetzung nach einem der vorhergehenden Ansprüche, wobei das anionische Dispergiermittel ein mit Ammoniak neutralisiertes Kolophoniumharz ist.

8. Zusammensetzung nach einem der Ansprüche 1 bis 6, wobei das anionische Dispergiermittel ein Copolymer von Styrol und Maleinsäureanhydrid ist, das mit einem Material ausgewählt aus der Gruppe bestehend aus Ammoniak, Aminomethylpropanol, Ethanolamin oder Gemischen davon neutralisiert ist, wobei das Copolymer von Styrol und Maleinsäureanhydrid vorzugsweise mit Ammoniak neutralisiert ist.

9. Zusammensetzung nach einem der Ansprüche 8, wobei das gewichtsmittlere Molekulargewicht des Styrol-Maleinsäureanhydrid-Copolymers ≥ 5000 beträgt.

10. Zusammensetzung nach einem oder mehreren der Ansprüche 8-9, wobei das Molverhältnis von Styrol zu Maleinsäureanhydrid des Styrol-Maleinsäureanhydrid-Copolymer-Dispergiermittels ≥ 2:1, vorzugsweise ≥ 3:1, beträgt.

11. Zusammensetzung nach einem der vorhergehenden Ansprüche, umfassend ein wasserlösliches organisches Lösungsmittel mit einem Siedepunkt von weniger als 200 °C, wobei die Menge des wasserlöslichen organischen Lösungsmittels vorzugsweise ≤ 30 % beträgt; wobei vorzugsweise die Gesamtmenge an wasserlöslichen organischen Lösungsmitteln mit einem Siedepunkt ≥ 200°C weniger als 5 % beträgt.

12. Zusammensetzung nach Anspruch 11, wobei das wasserlösliche organische Lösungsmittel eine Verdampfungswärme ≤ 500 J g⁻¹ aufweist, und/oder wobei das Lösungsmittel 3-Methoxy-3-methyl-1-butanol ist.

13. Verfahren zum Drucken eines Artikels, umfassend Drucken der Zusammensetzung nach einem oder mehreren der Ansprüche 1-12 auf ein Substrat und Trocknen; vorzugsweise umfassend ein Substrat, das zum Drucken von Verpackungen, Lebensmittelverpackungen, Metallsubstraten, Textilien, Dekorlaminaten und Grafiken geeignet ist.

14. Verfahren nach Anspruch 13, wobei die Druckmaschinengeschwindigkeit ≥ 75 m/min beträgt.

15. Verwendung eines hydroxyfunktionellen PUDs in einer wässrigen Tintenstrahlzusammensetzung, wobei das PUD eine mittlere Partikelgröße ≤ 60 nm und einen Hydroxylgehalt, bezogen auf das Trockenpolymergewicht, ≤ 60 mg KOH/g aufweist, wobei die wässrige Tintenstrahlzusammensetzung wiederauflösbar ist, wobei die wässrige Tintenstrahlzusammensetzung wie in einem der Ansprüche 1 bis 12 definiert ist.

## Revendications

1. Composition aqueuse pour jet d'encre comprenant un PUD à fonction hydroxy, dans laquelle le PUD a une taille moyenne de particule de ≤ 60 nm et une teneur en hydroxyle, sur la base du poids de polymère sec, de ≤ 60 mgKOH/g,
dans laquelle la composition comprend en outre une dispersion aqueuse de pigment préparée au moyen d'un dispersant anionique, dans laquelle le dispersant anionique est :
(i) un copolymère de styrène et d'anhydride maléique neutralisé par une matière choisie dans le groupe constitué par l'ammoniac, l'aminométhylpropanol, l'éthanolamine ou leurs mélanges ; et/ou
(ii) une résine de colophane neutralisée par de l'ammoniac.

2. Composition selon la revendication 1, dans laquelle la taille moyenne de particule est de 10-60 nm ; ou de 10-50 nm ; ou de 10-40 nm ; ou de 15-60 nm ; ou de 15-50 nm ; ou 15-40 nm.

3. Composition de la revendication 1 ou 2, dans laquelle la teneur en hydroxyle est de 10-60 mgKOH/g, préférablement de 20-60 mgKOH/g.

4. Composition selon l'une quelconque des revendications précédentes, dans laquelle le PUD est préparé en utilisant un polycarbonate diol et/ou dans laquelle le PUD n'a pas de groupe cétone ou aldéhyde au niveau d'une ou plusieurs extrémités de chaîne de polymère.

5. Composition selon l'une quelconque des revendications précédentes, dans laquelle le PUD est un PUD anionique, préférablement dans laquelle le PUD comprend des groupes carboxyliques en tant que partie de son squelette et/ou dans laquelle le PUD a un poids moléculaire moyen de ≥ 10 000 Dalton, préférablement ≥ 12 000 Dalton.

6. Composition selon l'une quelconque des revendications précédentes, dans laquelle le PUD est neutralisé par une amine tertiaire ayant un point d'ébullition inférieur à 150 °C, préférablement dans laquelle l'amine tertiaire est la N,N-diméthyléthanolamine ou la triéthylamine ou un mélange de celles-ci, plus préférablement dans laquelle l'amine tertiaire est la triéthylamine.

7. Composition selon l'une quelconque des revendications précédentes, dans laquelle le dispersant anionique est une résine de colophane neutralisée par de l'ammoniac.

8. Composition selon l'une quelconque des revendications 1 à 6, dans laquelle le dispersant anionique est un copolymère de styrène et d'anhydride maléique neutralisé par une matière choisie dans le groupe constitué par l'ammoniac, l'aminométhylpropanol, l'éthanolamine ou leurs mélanges, préférablement dans laquelle le copolymère de styrène et d'anhydride maléique est neutralisé par de l'ammoniac.

9. Composition selon l'une quelconque des revendications 8, dans laquelle le poids moléculaire moyen en poids du copolymère styrène-anhydride maléique est ≥ à 5 000.

10. Composition selon l'une quelconque ou plusieurs des revendications 8-9, dans laquelle le rapport molaire de styrène sur anhydride maléique du dispersant copolymère styrène-anhydride maléique est ≥ 2:1, préférablement ≥ 3:1.

11. Composition selon l'une quelconque des revendications précédentes, comprenant un solvant organique hydrosoluble ayant un point d'ébullition inférieur à 200 °C, préférablement dans laquelle la quantité du solvant organique hydrosoluble est ≤ 30 % ; préférablement dans laquelle la quantité totale de solvants organiques hydrosolubles ayant un point d'ébullition ≥ 200 °C est inférieure à 5 %.

12. Composition selon la revendication 11, dans laquelle le solvant organique hydrosoluble a une chaleur de vaporisation ≤ 500 J g⁻¹ et/ou dans laquelle le solvant est le 3-méthoxy-3-méthyl-1-butanol.

13. Procédé pour imprimer un article, comprenant une impression de la composition selon l'une quelconque ou plusieurs des revendications 1-12 sur un substrat et un séchage ; comprenant préférablement un substrat approprié pour l'impression d'un emballage, d'un emballage alimentaire, de substrats métalliques, de textiles, de stratifiés décoratifs et de graphismes.

14. Procédé selon la revendication 13, dans lequel la vitesse de la presse d'impression est ≥ 75 m/min.

15. Utilisation d'un PUD à fonction hydroxy dans une composition aqueuse pour jet d'encre, dans laquelle le PUD a une taille moyenne de particule de ≤ 60 nm et une teneur en hydroxyle, sur la base du poids de polymère sec, de ≤ 60 mgKOH/g, dans laquelle la composition aqueuse pour jet d'encre est résoluble, dans laquelle la composition aqueuse pour jet d'encre est telle que définie dans l'une quelconque des revendications 1 à 12.
